# EUROPÄISCHE PATENTSCHRIFT

(11) **EP 2 604 839 B1**
(45) Veröffentlichungstag und Bekanntmachung des Hinweises auf die Patenterteilung: **25.05.2016**
(21) Anmeldenummer: 11400060.7
(22) Anmeldetag: 16.12.2011
(51) Int. Cl.: F02K 9/42, F02K 9/56

(54) **Triebwerk**
Engine
Moteur

(43) Veröffentlichungstag der Anmeldung: 19.06.2013
(73) Patentinhaber: Astrium GmbH, 82024 Taufkirchen (DE)
(72) Erfinder: Schwarting, Walter, 26127 Oldenburg (DE)
(74) Vertreter: Marschall, Stefan

(56) Entgegenhaltungen:
- EP-A1- 0 091 852
- FR-A- 1 233 817
- FR-A1- 2 150 824
- US-A- 3 417 563
- US-A- 5 054 287
- US-A1- 2002 175 247
- US-A1- 2003 019 977
- US-A1- 2010 094 522
- US-B1- 6 619 031

## Beschreibung

Die Erfindung betrifft ein Triebwerk, insbesondere ein Lageregelungs-Triebwerk für Raumfahrzeuge, das mit gasförmigen Treibstoffen betrieben wird, wobei die gasförmigen Treibstoffe aus reagierenden Gasen bestehen , wobei eine Vorrichtung für eine auf exakte Sollwerte korrigierte Regelung des Massenstromes zu einer Brennkammer des Triebwerks vorgesehen ist und wobei die Regelungsvorrichtung aus einem ersten Regelkanal für ein Brenn-Gas sowie einem zweiten Regelkanal für ein Oxidator-Gas besteht und die beiden Regelkanäle mit einer Regelungseinheit verbunden sind.

Zur Lageregelung von Raketenstufen, Raumfahrzeugen oder Satelliten unter Schwerelosigkeit werden derzeit Kleintriebwerke eingesetzt, die entweder mit Kaltgas oder mit flüssigen Treibstoffen betrieben werden. Diese bekannten Triebwerke werden auch als Mono-Propellant- bzw. Bi-Propellant-Triebwerke bezeichnet. So ist aus der US 2003/019977 A1 ein Bi-Propellant-Triebwerk bekannt geworden, das neben flüssigen Treibstoffen auch mit festen oder gasförmigen Treibstoffen, die aus je einem Brenn-Gas und einem Oxidator-Gas bestehen, betrieben werden kann.

Darüber hinaus ist aus der US 3 417 563 A ein Triebwerk der eingangs genannten Art bekannt geworden, bei dem gasförmiger Treibstoff aus kryogenen Flüssigtreibstoffen generiert wird und über eine Regelungsvorrichtung sowohl der Druck als auch die Temperatur innerhalb vorbestimmter Grenzen eingestellt werden und das Triebwerk wird auf diese Weise bei konstantem Druck und konstanter Temperatur versorgt.

Daneben ist weiterhin aus der FR 1 233 817 A ein Ansaugfilter für Luft oder Verbrennungsluft mit dem zusätzlichen Zweck einer Schalldämpfung des Ansauggeräusches bekannt geworden, der speziell bei Verbrennungsmaschinen, Kompressoren und anderen luftatmenden Maschinen anwendbar ist, bei dem jedoch keine individuelle Regelung der Gasgemisch-Komponenten vorgesehen ist.

Schließlich ist in der FR 2 150 824 A1 eine Anordnung zur Mischung gasförmiger Brennstoffe beschrieben, bei die verwendeten gasförmigen Brennstoffe in keinem Fall - auch bei einer Druck- oder Temperaturvariation - miteinander reagieren dürfen und bei der deshalb Misch- und Brennkammer getrennt voneinander angeordnet sind.

Aufgabe der Erfindung ist es, ein Lageregelungs-Triebwerk der eingangs genannten Art bereitzustellen, das nicht durch eine zwingende Vorgabe von konstanten Gasdichten mit jeweils definierter Temperatur und definiertem Druck versorgt wird, sondern mit einem jeweils individuell geregelten Massenstrom bei fluktuierender Gasdichte, wobei die Massenströme der reagierenden Gase zusammenhängend korrekt regelbar sein sollen.

Die Erfindung löst diese Aufgabe dadurch, daß bei einem derartigen Triebwerk über einen Eingang der Regelungseinheit die aktuellen Werte der Temperaturen und Drücke der beiden Gase zuführbar sind und daß über einen Ausgang der Regelungseinheit sowohl der Gesamt-Massenstrom als auch das Verhältnis der Massenströme der beiden Regelkanäle regelbar sind.

Ein derartiges Gas-Triebwerk, das mit Dämpfen von tiefkalt gelagertem Flüssiggas, wie z.B. Flüssig-Wasserstoff (LH2) und Flüssig-Sauerstoff (LOX), betrieben werden soll, stellt besondere Anforderungen an die thermodynamischen Zustände der verwendeten Brenngase. So müssen die beiden miteinander reagierenden Gaskomponenten in jeweils kontrollierter Menge, d.h. mit einem definierten Massenstrom, angeboten werden, um den geforderten Schub zu erreichen. Für ein als reduzierend einzustellendes Mischungsverhältnis von Brennstoff zu Oxidator ist es beispielsweise, um eine Oxidation, d.h. eine Korrosion bzw. Verzunderung, zu vermeiden, notwendig, den geregelten Massenstrom des Brenngases Wasserstoff mit einem definierten, leicht unter-stöchimetrisch geregelten Massenstrom des Oxidators Sauerstoff zu vermischen.

Bei gasversorgten Antrieben ist eine auf den Massenfluß bezogene, konstante Versorgung deshalb problematisch, weil der jeweilige Gasdruck, wie auch die aktuellen Temperaturen, ständig schwanken und sich damit die aktuelle Gasdichte verändert, was auch die Brenngas-Zusammensetzung ständig verändert. Dadurch würden solche Triebwerke entweder gar nicht oder nur unzuverlässig zünden bzw. der Brennprozeß könnte vollends zum Erliegen kommen. Bei einer solchen nicht erfolgten Zündung aber könnte ein übermäßiger Vorlauf des Gasgemischs zu einer verzögerten Gasexplosion einer zu großen Stoffmenge mit katastrophalen Folgen führen.

Aus diesem Grund ist in vorteilhafter Weiterbildung des Triebwerks nach der Erfindung eine Vorrichtung vorgesehen, die eine exakte Gasgemisch-Aufbereitung durch eine schnell ablaufende und auf exakte Sollwerte korrigierte Massenfluß-Regelung ermöglicht. Damit wird sichergestellt, daß das gasversorgte Triebwerk mit einem vorgegebenen absoluten Massenstrom beider Komponentengase versorgt wird, um den geforderten Schub zu erzeugen. Gleichzeitig wird das relative Massenstrom-Verhältnis der beiden Gase zueinander kontrolliert, um neben dem reduzierenden Effekt eine gute Zündfähigkeit zu erzielen, was beispielsweise im Puls-Mode-Betrieb wichtig ist, um die erforderliche Spontaneität zu gewährleisten.

Wegen der Variation der wahren Gasdichten über große Bereiche bewirkt die in vorteilhafter Weiterbildung der Erfindung vorgesehene Regelung eine aktive individuelle Blendenregelung der beiden Kanäle für den Wasserstoff und den Sauerstoff. Dazu wird erfindungsgemäß nach Messung der Parameter "Gasdruck" und "Gastemperatur" für jeden der beiden Kanäle, von denen einer als Master-Kanal und der andere als Slave-Kanal ausgelegt ist, eine Korrektur des Parameters "Gasdichte" vorgenommen und in Verbindung mit einem Sollwert für den geforderten Schub, d.h. den Gesamt-Massenstrom, an die jeweils regelnde Blende geleitet. In Abhängigkeit vom ebenfalls geforderten Mischungsverhältnis der beiden Gase zueinander wird dabei der für den Slave-Kanal ermittelte Wert entsprechend korrigiert und an die Regelblende des Slave-Kanals geleitet.

Die Zuordnung von Steuerwerten zum Gasdurchsatz erfolgt für beide Kanäle dabei in Form einer Kalibrierung. Regelungstechnische Zeitkonstanten für die Korrekturen der Steuergrößen aufgrund der Kalibrierung, der Korrektur der wahren Gasdichte und der Berücksichtigung des relativen "Brenngas-Verhältnisses" sind in ihrer Anforderung von kurzer Dauer. Eine entsprechend hohe Regelungsgeschwindigkeit wird in der bevorzugten Ausführungsform der Erfindung erreicht, indem mit schnellen Prozessoren die erforderlichen Korrekturwerte aus Tabellen, sogenannten "Look-up"-Memories, entnommen und verarbeitet werden. Alternativ kann der geforderte korrekte thermodynamische Gas-Massenstrom aber auch mit Hilfe schneller Rechen-Algorithmen aus Polynom-Funktionen gesteuert werden und dabei der thermodynamische Zustand mittels Zustandsgleichungen nach Helmholtz berechnet werden.

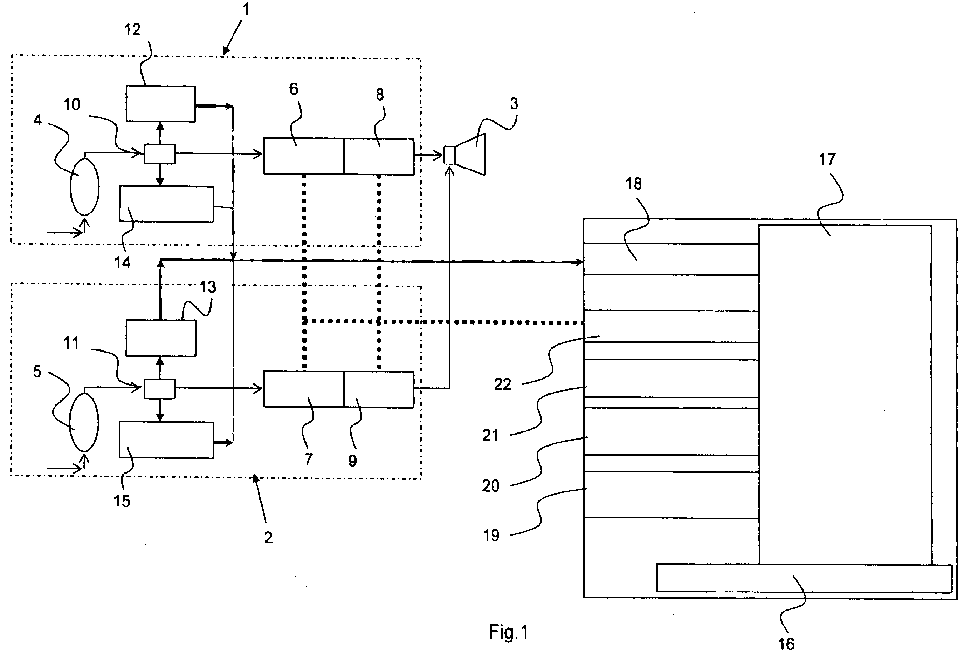

Nachfolgend soll das Triebwerk gemäß der Erfindung anhand eines in der Zeichnung dargestellten Ausführungsbeispiels näher erläutert werden. Die Figur zeigt in schematischer Darstellung den Aufbau einer Vorrichtung für die Massenfluß-Regelung eines mit reagierenden Gasen betriebenen Lageregelungs-Triebwerks.

Die Regelungsvorrichtung besteht aus einem ersten Regelkanal 1, dem sogenannten Master-Kanal für das Brenn-Gas sowie einem zweiten Regelkanal 2, dem sogenannten Slave-Kanal für das Oxidator-Gas, die jeweils getrennt der Brennkammer eines Lageregelungs-Triebwerks 3 zugeführt werden. Jeder der beiden Regelkanäle 1, 2 beaufschlagt einen Tank 4, 5 für das Brenn-Gas bzw. für das Oxidator-Gas, von denen aus jeweils eine regelbare Leitung mit je einem elektrisch ansteuerbaren Ventil 6, 7, dem sogenannten Flight Control Valve (FCV) mit Regel-Charakteristik, sowie einem seriell im Falle der hier dargestellten Anordnung nachgeschalteten Ventil 8, 9 mit schneller Auf-/Zu-Funktion, einem sogenannten Latch-Valve, die Brennkammer des Lageregelungs-Triebwerks 3 versorgt. In einer Sensor-Einheit 10, 11 können ferner Informationen über Druck 12, 13 bzw. Temperatur 14, 15 entnommen werden.

Die FCV 6, 7 beider Regelkanäle 1,2 sind an den relativen Massenstrom-Bedarf angepaßt; dabei ist ihr Auslegungs-Querschnitt so bemessen, daß das in etwa benötigte, nahezu stöchiometrische Verhältnis der Massenströme - Wasserstoff:Sauerstoff = 2:1 im wirksamen Querschnitt bereits berücksichtigt ist. Ein in einer Regelungseinheit 16 angeordneter schneller Prozeßrechner 17 mit fehler-tolerantem ausfallsicherem Design führt permanent die Berechnung der Gas-Dichte-Werte zu den aktuellen Werten der Temperatur T und des Druckes p durch. Die aktuellen Werte dieser beiden Regelgrößen werden dem Prozeßrechner 17 über einen Eingang 18 zugeführt, der für beide Massenregler 6 bzw. 7 aus entsprechenden Tabellen 19 bis 21, sogenannten "Look-up"-Memories, und aus dem Anforderungswert als Sollwert sowohl für den Gesamt-Massenstrom als auch für das relative Brenngas-Verhältnis Kalibrierwerte errechnet. In einem weiteren Rechenschritt wird dann über einen entsprechenden Ausgang 22 sowohl der Gesamt-Massenstrom geregelt als auch parallel dazu eine eventuell erforderlich gewordene Korrektur des Slave-Kanals auf den Sollwert der relativen Gaszusammensetzung durchgeführt. Als Sollwerte werden dabei lediglich der gewünschte Volumenstrom, d.h. der erforderliche Schub, und das im Brenn- bzw. im Zünd-Prozeß verlangte, variable Brennstoff:Oxidator-Verhältnis vorgegeben.

## Patentansprüche

1. Triebwerk, insbesondere ein Lageregelungs-Triebwerk für Raumfahrzeuge, das mit gasförmigen Treibstoffen betrieben wird, wobei die gasförmigen Treibstoffe aus reagierenden Gasen bestehen, wobei eine Vorrichtung für eine auf exakte Sollwerte korrigiert Regelung des Massenstromes zu einer Brennkammer (3) des Triebwerks vorgesehen ist und wobei die Regelungsvorrichtung aus einem ersten Regelkanal für ein Brenn-Gas sowie einem zweiten Regelkanal für ein Oxidator-Gas besteht und die beiden Regelkanäle mit einer Regelungseinheit verbunden sind, **dadurch gekennzeichnet, daß** über einen Eingang (18) der Regelungseinheit (16) die aktuellen Werte der Temperaturen und Drücke der beiden Gase zuführbar sind und daß über einen Ausgang (22) der Regelungseinheit (16) sowohl der Gesamt-Massenstrom als auch das Verhältnis der Massenströme der beiden Regelkanäle (1, 2) regelbar sind.

2. Triebwerk nach Anspruch 1, **dadurch gekennzeichnet, daß** die Regelungseinheit (16) einen schnellen Prozeßrechner (17) umfaßt.

3. Triebwerk nach Anspruch 2, **dadurch gekennzeichnet, daß** die Regelungseinheit (16) mit elektronischen Tabellen (19 - 21) ausgestattet ist.

4. Triebwerk nach Anspruch einem der Ansprüche 1 bis 3, **dadurch gekennzeichnet, daß** es sich bei den reagierenden Gasen um Dämpfe von tiefkalt gelagerten Flüssiggasen handelt.

5. Triebwerk nach Anspruch 4, **dadurch gekennzeichnet, daß** es sich bei den Flüssiggasen um Flüssig-Wasserstoff (LH2) und Flüssig-Sauerstoff (LOX) handelt.

## Claims

1. A jet engine, in particular a position control jet engine for space vehicles, which is operated with gaseous fuels, wherein the gaseous fuels consist of reacting gases, wherein a device is provided for a control of the mass flow to a combustion chamber (3) of the jet engine which is corrected to exact set values is provided, and wherein the control device consists of a first control channel for a combustion gas and a second control channel for an oxidizer gas and the two control channels are connected to a control unit, **characterized in that** via an input (18) of the control unit (16) the current values of the temperatures and pressures of the two gases can be fed in and **in that** via an output (22) of the control unit (16) both the total mass flow and also the ratio of the mass flows of the two control channels (1, 2) can be controlled.

2. The jet engine according to Claim 1, **characterized in that** the control unit (16) comprises a fast process computer (17).

3. The jet engine according to Claim 2, **characterized in that** the control unit (16) is equipped with electronic tables (19 - 21).

4. The jet engine according to any one of the Claims 1 to 3, **characterized in that** the reacting gases are vapours of cryogenically stored liquid gases.

5. The jet engine according to Claim 4, **characterized in that** the liquid gases are liquid hydrogen (LH2) and liquid oxygen (LOX).

## Revendications

1. Propulseur, en particulier propulseur de réglage de position pour véhicules spatiaux, lequel fonctionne avec des combustibles gazeux, dans lequel les combustibles gazeux se composent de gaz réactifs, dans lequel on prévoit un dispositif pour une régulation corrigée à des valeurs de consigne exactes du courant massique vers une chambre de combustion (3) du propulseur, et dans lequel le dispositif de régulation se compose d'un premier canal de régulation pour un gaz combustible ainsi que d'une deuxième canal de régulation pour un gaz oxydant, et les deux canaux de régulation étant reliés à une unité de régulation, **caractérisé en ce que**, via une entrée (18) de l'unité de régulation (16), il est possible d'amener les valeurs actuelles des températures et pressions des deux gaz et **en ce que**, via une sortie (22) de l'unité de régulation (16), il est possible de réguler le courant massique total tout comme également le rapport des courants massiques des deux canaux de régulation (1, 2).

2. Propulseur selon la revendication 1, **caractérisé en ce que** l'unité de régulation (16) comprend un ordinateur de traitement rapide (17).

3. Propulseur selon la revendication 2, **caractérisé en ce que** l'unité de régulation (16) est dotée de tableaux électroniques (19 - 21).

4. Propulseur selon l'une des revendications 1 à 3, caractérisé qu'en ce qui concerne les gaz réactifs, il s'agit de vapeurs de gaz liquides stockés à basse température.

5. Propulseur selon la revendication 4, caractérisé qu'en ce qui concerne les gaz liquides, il s'agit d'hydrogène liquide (LH2) et d'oxygène liquide (LOX).
